# EUROPEAN PATENT APPLICATION

(11) **EP 2 180 279 A2**
(43) Date of publication of application: **28.04.2010**
(21) Application number: 09252464.4
(22) Date of filing: 22.10.2009
(51) Int. Cl.: F25D 29/00

(54) **Controlling frozen state of a cargo**

(30) Priority: 24.10.2008 US 108082 P
(71) Applicant: THERMO KING CORPORATION, Minneapolis Minnesota 55420 (US)
(72) Inventor: Thogersen, Ole, 5800 Nyborg (DK); Dyrmose, Allan, 5400 Bogense (DK); Vad Steffensen, Dan, 8981 Spentrup (DK)
(74) Representative: Holmes, Matthew Peter

(57) **Abstract**

A method for operating a refrigeration system (100) for a container for refrigerating frozen cargo, and a system employing the method. The method includes providing a compressor (110), a condenser (120), and an evaporator (140) connected in series, and providing an evaporator fan (150). The method also includes alternating operation of the compressor (110) and the evaporator fan (150), in combination, between an active mode where the compressor compresses a refrigerant and directs the refrigerant through the condenser and the evaporator, and where the evaporator fan (150) rotates to supply refrigerated supply air from the evaporator to the cargo within the container, and a sleep mode in which the compressor (110) and the evaporator fan (150) are deactivated, and operating the compressor and the evaporator fan in the sleep mode for a duration that is based on a measured duration of a prior sleep mode.

## Description

### CROSS REFERENCE TO RELATED APPLICATIONS

This application claims the priority of U.S. Provisional Patent Application No. 61/108,082, filed October 24, 2008, the contents of which are hereby incorporated by reference herein.

### FIELD OF THE INVENTION

This invention relates to climate control in cargo containers and to devices for controlling the climate in cargo containers. In particular the invention relates to refrigeration systems for use in cargo containers and methods for operating such systems.

### BACKGROUND OF THE INVENTION

The present invention relates to transporting and storing temperature sensitive cargo over long periods of time using a controlled climate in the space where the cargo is loaded. Climate control includes controlling the temperature of the cargo within a certain acceptable range. Controlling the temperature includes bringing the temperature of the cargo into the acceptable range (by refrigerating or heating) and maintaining the temperature within that range. Climate control may also include controlling other parameters such as humidity and composition of the atmosphere.

Refrigeration is the process of removing heat from an enclosed space, or from a substance, and moving it to a place where it is unobjectionable. The primary purpose of refrigeration is lowering the temperature of the enclosed space or substance and then maintaining that lower temperature.

One commonly used refrigeration technique is the vapor-compression cycle. The vapor-compression cycle is used in most household refrigerators as well as in many large commercial and industrial refrigeration systems.

A refrigerated container or reefer is a shipping container used in intermodal freight transport, including rail, ship and truck, where the cargo is refrigerated (chilled or frozen) for the transportation of temperature sensitive cargo. A reefer will usually have an integral refrigeration unit.

The reliability of the refrigeration unit is of paramount importance. The temperature of temperature sensitive cargo should be kept within predefined limits. Some cargo must be maintained frozen, and the temperature of any part of the frozen cargo must be kept below a predefined freezing temperature which depends on the cargo, e.g. below -18 degrees C or lower, while other cargo, in particular commodities such as fresh meat, fresh fruit and vegetables, should be kept chilled to stay fresh, but not frozen. For chilled fruit and vegetables there is a lowest acceptable temperature below which the commodity will begin degrading and loose its freshness. Such temperature is dependent upon the type of fruit.

### SUMMARY OF THE INVENTION

In one embodiment, the invention provides a method for operating a refrigeration system for a container for refrigerating frozen cargo. The method includes providing a compressor, a condenser, and an evaporator connected in series, and providing an evaporator fan. The method also includes alternating operation of the compressor and the evaporator fan, in combination, between an active mode where the compressor compresses a refrigerant and directs the refrigerant through the condenser and the evaporator, and where the evaporator fan rotates to supply refrigerated supply air from the evaporator to the cargo within the container, and a sleep mode in which the compressor and the evaporator fan are deactivated, and operating the compressor and the evaporator fan in the sleep mode for a duration that is based on a measured duration of a prior sleep mode.

Another embodiment of the invention provides a refrigeration system for a container for refrigerating frozen cargo. The system includes a compressor, a condenser, and an evaporator connected in series. The system also includes an evaporator fan and a controller. The controller is programmed to alternate operation of the compressor and the evaporator fan, in combination, between an active mode where the compressor compresses a refrigerant and directs the refrigerant through the condenser and the evaporator, and where the evaporator fan rotates to supply refrigerated supply air from the evaporator to the cargo within the container, and a sleep mode in which the compressor and the evaporator fan are deactivated. The controller is further programmed to operate the compressor and the evaporator fan in the sleep mode for a duration that is based on a measured duration of a prior sleep mode.

Other aspects of the invention will become apparent by consideration of the detailed description and accompanying drawings.

### BRIEF DESCRIPTION OF THE DRAWINGS

Figure 1 shows schematically a refrigeration system according to the invention.

Figure 2 shows a refrigerated container with the refrigeration system in Figure 1 installed.

Figure 3 is a diagram illustrating the return air temperature when using the invention.

### DETAILED DESCRIPTION OF THE INVENTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

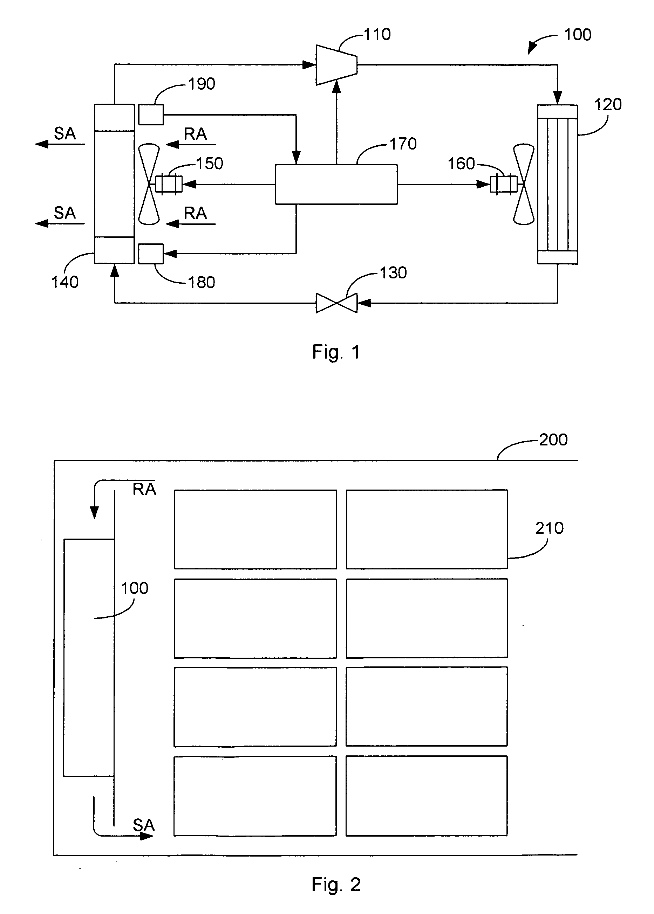

Figure 1 is a simplified diagram of the basic components of a typical one-stage vapor-compression refrigeration system 100 according to the invention. In this cycle, a circulating refrigerant enters the compressor 110 as a vapor. In the compressor the vapor is compressed and exits the compressor superheated. The superheated vapor travels through the condenser 120 which first cools and removes the superheat and then condenses the vapor into a liquid by removing additional heat at constant pressure and temperature. The liquid refrigerant goes through an expansion valve 130 (also called a throttle valve) where its pressure abruptly decreases, causing flash evaporation and auto-refrigeration of, typically, less than half of the liquid. That results in a mixture of liquid and vapor at a lower temperature and pressure. The cold liquid-vapor mixture then travels through the evaporator 140 coil or tubes and is completely vaporized by cooling the warm return air RA returning from the refrigerated space being blown by an evaporator fan 150 across the evaporator coil or tubes. The cool supply air SA is blown into the refrigerated space. The resulting refrigerant vapor returns to the compressor inlet to complete the thermodynamic cycle. A condenser fan 160 removes condensation heat from the condenser 120. A controller 170 controls the operation of the refrigeration system and its individual components.

During operation water vapor will condensate on the evaporator 140 and form a layer of ice which will degrade the efficiency of the evaporator. The ice is removed in defrosting cycles where the compressor 110 and the evaporator fan 150 are inactivated, and a heater 180 is activated which will heat the evaporator 140. A temperature sensor 190 senses the temperature of the evaporator 140 and when it has been determined, based on the sensed evaporator temperature, that the ice is melted, the compressor 110 is again activated. When the temperature of the evaporator is sufficiently low the evaporator fan 150 is activated and the refrigeration system operates again.

The refrigeration system 100 can have one or more evaporator fans 150. The power of the evaporator fan motors can be controlled in two or more steps or continuously by the controller 170. For simplicity, only high speed operation and low speed operation are described, but the person having ordinary skill in the art will understand that the described method applies in general to motors with controllable speed.

Figure 2 shows schematically a portion of a refrigerated container 200 loaded with cargo 210 to be refrigerated, in this case the cargo is to be frozen and kept frozen. The container 200 has a refrigeration system 100 installed in one end, and the container has doors (not shown) in the opposite end for loading and unloading the cargo 210. The evaporator fan or fans 150 of the refrigeration system 100 blow refrigerated supply air SA into the container where it circulates around the cargo 210 and returns as return air RA to the refrigeration system 100.

The energy required for circulating the air in the container is ultimately dissipated as heat in the container due to friction. Depending on whether the evaporator fan 150 is operated in a low speed mode or in a high speed mode it delivers from a few hundred watts or up to a few kilowatts (kW) which is dissipated as heat in the container. This energy adds to the energy that enters the container from the ambient and the heat that is generated by the cargo itself, all of which must be removed by the refrigeration system. Assuming efficiencies of 100 % of both the evaporator fan and the refrigeration system, for each kW consumed by the evaporator fan another kW will be consumed by the refrigeration system.

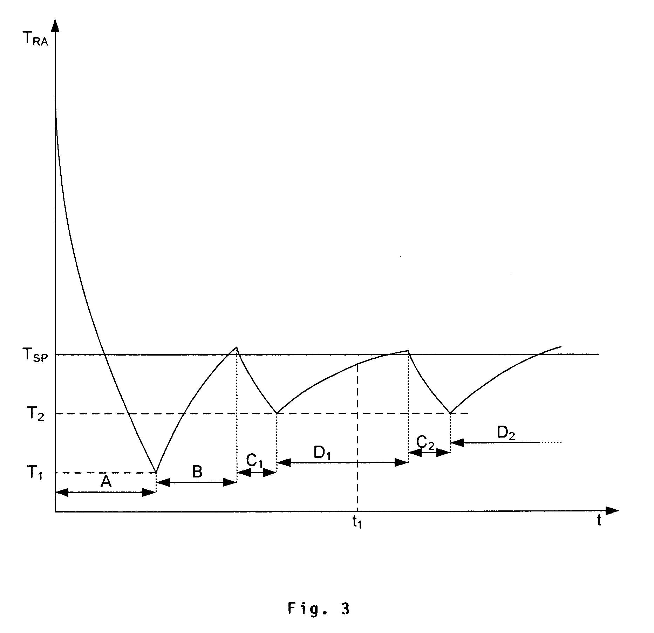

Figure 3 shows the temperature T_{RA} of the return air as a function of time t during the operation of the refrigeration system of the invention. The return air RA is drawn from the container, and the temperature T_{RA} of the return air therefore represents the temperature of the cargo.

In a first phase A the cargo is refrigerated to a temperature T1 below the set-point temperature T_{SP}. In this phase the compressor is operated at or near its full capacity to bring down the temperature of the cargo, and the evaporator fan is operated at low speed, the temperature T_{RA} of the return air is monitored. Phase A is terminated when the temperature T_{RA} of the return air reaches a first low temperature T₁.

In phase B the compressor is inactivated and the evaporator fan is still operated at low speed to circulate air in the container. In this phase the temperature T_{RA} of the return air will increase due to heat leakage from the ambient into the container and to the friction energy dissipated due to the air flow through the container. The temperature T_{RA} of the return air is constantly monitored, and when the temperature of the return air reaches a predetermined upper limit temperature value related to the set-point temperature T_{SP}, phase B is terminated. The duration of phase B is observed.

In phase C₁ the compressor and the evaporator fan are operated at the same conditions as in phase A, i.e. the compressor is operated at or near its full capacity, the evaporator fan is operated at low speed and the temperature T_{RA} of the return air is monitored. Phase C₁ is terminated when the temperature T_{RA} of the return air reaches a second low temperature T₂ which is higher than the first low temperature T₁.

In phase D₁ the compressor is made inoperative and the evaporator fan is turned off. These two components thus consume no power, and the refrigeration system is in "sleep mode". When the evaporator fan is not operating there will be no air flow and thus no friction energy dissipated in the container, and the temperature curve in phase D₁ can therefore be expected to be less steep than in phase B. However, the starting temperature T₂ of phase D₁ is higher than the starting temperature T₁ of phase B. The target end temperature for phase D₁ is the same as for phase B. With the refrigeration system in "sleep mode" it will be necessary to determine a time for resuming refrigeration since there is no continuous monitoring of the return air temperature. In accordance with the invention this time is estimated based on the observed duration of a previous phase without refrigeration. As a first estimate, or seed estimate, the observed duration of phase B is taken.

In phase D₁, after the estimated duration of phase D₁, which here is chosen equal to the observed duration of phase B, i.e. at the time t₁, the evaporator fan is turned on for a period allowing measurement of the temperature T_{RA} of the return air, thus ending the sleep mode for phase D₁.

If the observed temperature T_{RA} of the return air is lower than a predetermined limit below the set-point temperature T_{SP} the system enter a new sleep period (i.e., a period after the sleep mode for phase D₁, in which the compressor and evaporator fan are again deactivated), and an estimated duration of the new sleep period is calculated by extrapolation of observed temperatures and durations.

If the observed temperature T_{RA}, of the return air is equal to or higher than the predetermined limit below the set-point temperature T_{SP} phase D₁ is terminated and phase C₂ is initiated where the system enters refrigeration mode with the compressor activated and evaporator fan operating at low speed. In principle, phase C₂ is similar to phase C₁ and the system is operated under the same conditions as in phase C₁ and phase C₂ is terminated when the temperature T_{RA} of the return air reaches the second low temperature T₂.

The duration of the next sleep mode phase, phase D₂, is estimated based on the observed duration of the preceding sleep mode phase, phase D₁, and the observed temperature at which it was terminated. In particular, if phase D1 was terminated at a temperature higher than the target end temperature, then the duration of phase D₂, is estimated correspondingly shorter, and if phase D1 was terminated at a temperature lower than the target end temperature, then the duration of phase D₂, is estimated correspondingly longer.

Various features and advantages of the invention are set forth in the following claims.

## Claims

1. A method for operating a refrigeration system for a container for refrigerating frozen cargo, the method comprising:
providing a compressor, a condenser, and an evaporator connected in series;
providing an evaporator fan;
alternating operation of the compressor and the evaporator fan, in combination, between an active mode where the compressor compresses a refrigerant and directs the refrigerant through the condenser and the evaporator, and where the evaporator fan rotates to supply refrigerated supply air from the evaporator to the cargo within the container, and a sleep mode in which the compressor and the evaporator fan are deactivated;
operating the compressor and the evaporator fan in the sleep mode for a duration that is based on a measured duration of a prior sleep mode.

2. The method of claim 1, wherein the prior sleep mode is the preceding sleep mode; or
wherein operating the compressor and the evaporator fan in the sleep mode includes operating the compressor and the evaporator fan in the sleep mode for a duration that is based on a duration of a prior sleep mode and a measured return air temperature at which the prior sleep mode was terminated.

3. The method of claim 1, further comprising determining an initial duration of an initial sleep mode by the following steps in sequence:
(i) operating the compressor and evaporator fan in the active mode;
(ii) monitoring the temperature of return air from the container;
(iii) deactivating the compressor when the temperature of the return air reaches a first predetermined low temperature which is lower than a predetermined set-point temperature;
(iv) calculating the time difference between the moment when the return air reaches the first predetermined low temperature with the compressor and evaporator fan in the active mode and when the return air temperature reaches the predetermined set-point temperature after the compressor has been deactivated; and
Wherein the method may optionally further comprise activating the compressor and the evaporator fan in the active mode when the temperature of the return air reaches the predetermined set-point temperature.

4. The method of claim 1, further comprising operating the compressor and evaporator fan in the active mode until the return air temperature reaches a first predetermined low temperature which is lower than the predetermined set-point temperature.

5. The method of claim 4, further comprising operating the compressor and evaporator fan in the sleep mode after the return air temperature reaches the first predetermined low temperature and until expiration of a duration based on a preceding sleep mode.

6. The method of claim 5, further comprising operating the evaporator fan upon expiration of the duration and measuring the return air temperature.

7. The method of claim 6, further comprising operating the compressor and the evaporator fan in the active mode if the measured return air temperature is at or higher than the predetermined set-point temperature; and operating the compressor and the evaporator fan in a new sleep period for an estimated duration calculated by extrapolation of observed temperatures and durations if the measured return air is lower than the predetermined set-point temperature; or
further comprising shortening the duration of the next sleep mode when the measured return air temperature at which the last sleep mode was terminated was higher than the predetermined set-point temperature; or
further comprising extending the duration of the next sleep mode when the measured return air temperature at which the last sleep mode was terminated was lower than the predetermined set-point temperature.

8. A refrigeration system for a container for refrigerating frozen cargo, the system comprising:
a compressor, a condenser, and an evaporator connected in series;
an evaporator fan; and
a controller programmed to alternate operation of the compressor and the evaporator fan, in combination, between an active mode where the compressor compresses a refrigerant and directs the refrigerant through the condenser and the evaporator, and where the evaporator fan rotates to supply refrigerated supply air from the evaporator to the cargo within the container, and a sleep mode in which the compressor and the evaporator fan are deactivated, and
wherein the controller is programmed to operate the compressor and the evaporator fan in the sleep mode for a duration that is based on a measured duration of a prior sleep mode.

9. The system of claim 6, wherein the prior sleep mode is the preceding sleep mode; or
wherein the controller is programmed to operate the compressor and the evaporator fan based on a measured return air temperature at which the prior sleep mode was terminated.

10. The system of claim 8, wherein a controller is programmed to determine an initial duration of an initial sleep mode by executing the following in sequence:
(i) operating the compressor and the evaporator fan in the active mode;
(ii) monitoring the temperature of return air from the container;
(iii) deactivating the compressor when the temperature of the return air reaches a first predetermined low temperature which is lower than a predetermined set-point temperature;
(iv) calculating the time difference between the moment when the return air reaches the first predetermined low temperature with the compressor and evaporator fan in the active mode and when the return air temperature reaches the predetermined set-point temperature after the compressor has been deactivated; and
optionally the controller may be programmed to activate the compressor and the evaporator fan in the active mode when the temperature of the return air reaches the predetermined set-point temperature.

11. The system of claim 8, wherein the controller is programmed to operate the compressor and the evaporator fan in the active mode until the return air temperature reaches a first predetermined low temperature which is lower than the predetermined set-point temperature.

12. The system of claim 11, wherein the controller is programmed to operate the compressor and the evaporator fan in the sleep mode after the return air temperature reaches the first predetermined low temperature and until expiration of a duration based on a preceding sleep mode.

13. The system of claim 12, wherein the controller is programmed to operate the evaporator fan upon expiration of the duration and to measure the return air temperature.

14. The system of claim 13, wherein the controller is programmed to operate the compressor and the evaporator fan in the active mode if the measured return air temperature is at or higher than the predetermined set-point temperature; and the controller is programmed to operate the compressor and the evaporator fan in a new sleep period for an estimated duration calculated by extrapolation of observed temperatures and durations if the measured return air temperature is lower than the predetermined set-point temperature; or
wherein the length of the duration of the next sleep mode is shortened when the measured return air temperature at which that last sleep mode was terminated was higher than the predetermined set-point temperature; or
wherein the length of the duration of the next sleep mode is extended when the measured return air temperature at which that last sleep mode was terminated was lower than the predetermined set-point temperature.

15. A method for operating a refrigeration system for a container for refrigerating frozen cargo, the method comprising:
providing a compressor, a condenser, and an evaporator connected in series;
providing an evaporator fan;
alternating operation of the compressor and the evaporator fan, in combination, between an active mode where the compressor compresses a refrigerant and directs the refrigerant through the condenser and the evaporator, and where the evaporator fan rotates to supply refrigerated supply air from the evaporator to the cargo within the container, and a sleep mode in which the compressor and the evaporator fan are , deactivated;
operating the compressor and the evaporator fan in the sleep mode for a duration that is based on a measured duration of a prior sleep mode;
operating the compressor and evaporator fan in the active mode until the return air temperature reaches a first predetermined low temperature which is lower than the predetermined set-point temperature;
operating the compressor and evaporator fan in the sleep mode after the return air temperature reaches the first predetermined low temperature and until expiration of a duration based on a preceding sleep mode;
operating the evaporator fan upon expiration of the duration based on the preceding sleep mode and measuring a return air temperature;
operating the compressor and the evaporator fan in the active mode if the measured return air temperature is at or higher than the predetermined set-point temperature; and operating the compressor and the evaporator fan in a new sleep period for an estimated duration calculated by extrapolation of observed temperatures and durations if the measured return air is lower than the predetermined set-point temperature;
shortening the duration of the next sleep mode when the measured return air temperature at which the last sleep mode was terminated was higher than the predetermined set-point temperature; and
extending the duration of the next sleep mode when the measured return air temperature at which the last sleep mode was terminated was lower than the predetermined set-point temperature.
